# EUROPEAN PATENT APPLICATION

(11) **EP 1 683 700 A1**
(43) Date of publication of application: **26.07.2006**
(21) Application number: 05001474.5
(22) Date of filing: 25.01.2005
(51) Int. Cl.: B62B 7/14, B62B 7/08

(54) **Umbrella-folding frame, particularly for pushchairs, baby carriages and the like**

(71) Applicant: CAM IL MONDO DEL BAMBINO S.p.A., 24060 Telgate (Prov. of Bergamo) (IT)
(72) Inventor: Rho, Gianfranco, 24060 Telgate (Prov.of Bergamo) (IT)
(74) Representative: Modiano, Micaela Nadia

(57) **Abstract**

An umbrella-folding frame, particularly for pushchairs, baby carriages and the like, comprising a supporting framework that is provided with two upper front posts (2) and two lower front posts (3) which can move with respect to each other, and two rear posts (5), which are articulated to the lower front posts (3), and an assembly (10) for mutually connecting the posts for transition from an open position to a closed position and/or vice versa; the umbrella-folding frame also comprises means for detachably connecting to the supporting framework a seat (20) constituted by a sitting portion (21) to which a back (22) is articulated.

## Description

The present invention relates to a umbrella-folding frame particularly for pushchairs, baby carriages and the like.

As is known, umbrella-folding pushchairs for children are currently commercially available which are provided by means of a frame on which a seat is positioned; said seat is constituted by a sitting portion and by a back, which is hinged to the sitting portion and can be folded so as to allow to close the pushchair in an umbrella-like fashion.

These types of pushchair form armrests, which constitute an integral part of the framework and also allow to provide the element for attaching baskets, bassinets, bags, car seats and so forth, which for example are used only in the child's early months.

In the current solution, in practice these additional accessories are applied on top of the seat, which accordingly remains fitted to the frame even when it is not used.

With this solution, therefore, the underlying padding may turn out to be ruined or otherwise already dirty when the user removes the accessory to use the pushchair normally.

Moreover, the presence most of all of the back causes a rear space occupation that is awkward for the user, since it constitutes an element that protrudes to the rear and can hinder the user's movements toward the child.

Other known solutions provide a seat with an independent back, accordingly allowing to remove the back with respect to the seat. However, this solution is structurally very complicated and moreover is not aesthetically acceptable, since the frame of the seat, which is not removed, remains on the framework of the pushchair.

The aim of the invention is to solve the problem described above by providing an umbrella-folding frame, particularly for pushchairs, baby carriages and the like, which allows to radically solve the problem, by providing a solution in which the seat causes no hindrance at all to the user, with the additional possibility to avoid damaging or dirtying the seat padding.

Within this aim, an object of the invention is to provide an umbrella-folding frame that is particularly functional and further allows to perform conversion maneuvers in a particularly safe and quick manner.

Another object of the present invention is to provide a frame that thanks to its particular constructive characteristics is capable of giving the greatest assurances of reliability and safety in use.

Another object of the present invention is to provide an umbrella-folding frame, particularly for pushchairs, baby carriages and the like, that can be easily obtained starting from commonly commercially available elements and materials and is also competitive from a merely economical standpoint.

This aim and these and other objects that will become better apparent hereinafter are achieved by an umbrella-folding frame, particularly for pushchairs, baby carriages and the like, according to the invention, which comprises a supporting framework that is provided with two upper front posts, with each of which an armrest is stably associated, two lower front posts being connected to said two upper front posts and being mutually movable with respect to said upper front posts, two rear posts being further provided which are articulated to said lower front posts, an assembly for mutually connecting said posts for transition from an open position to a closed position and/or vice versa being also provided, characterized in that it comprises means for detachably connecting to said supporting framework a seat constituted by a sitting portion to which a back is articulated.

Further characteristics and advantages will become better apparent from the description of a preferred but not exclusive embodiment of an umbrella-folding frame particularly for pushchairs, baby carriages and the like, illustrated by way of non-limiting example in the accompanying drawings, wherein:

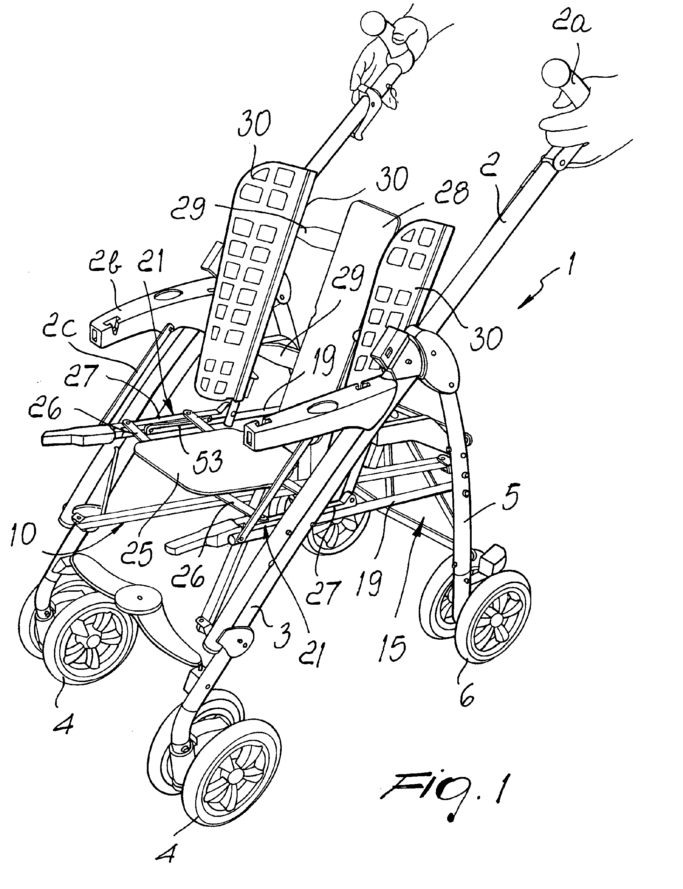

Figure 1 is a schematic perspective view of the frame, with the seat applied thereto;

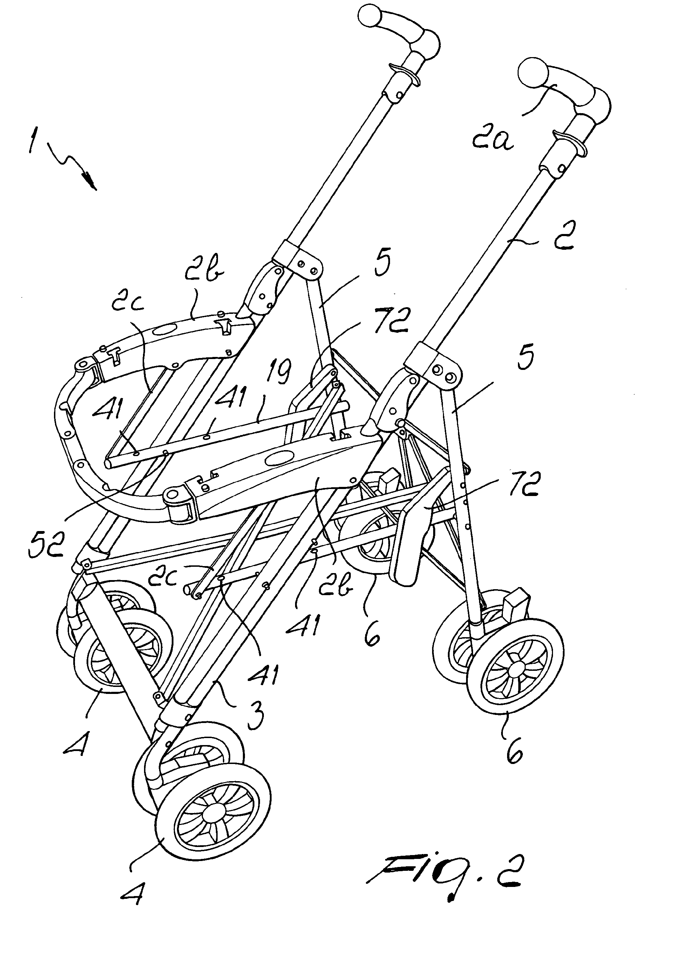

Figure 2 is a perspective view of the frame, with the seat removed;

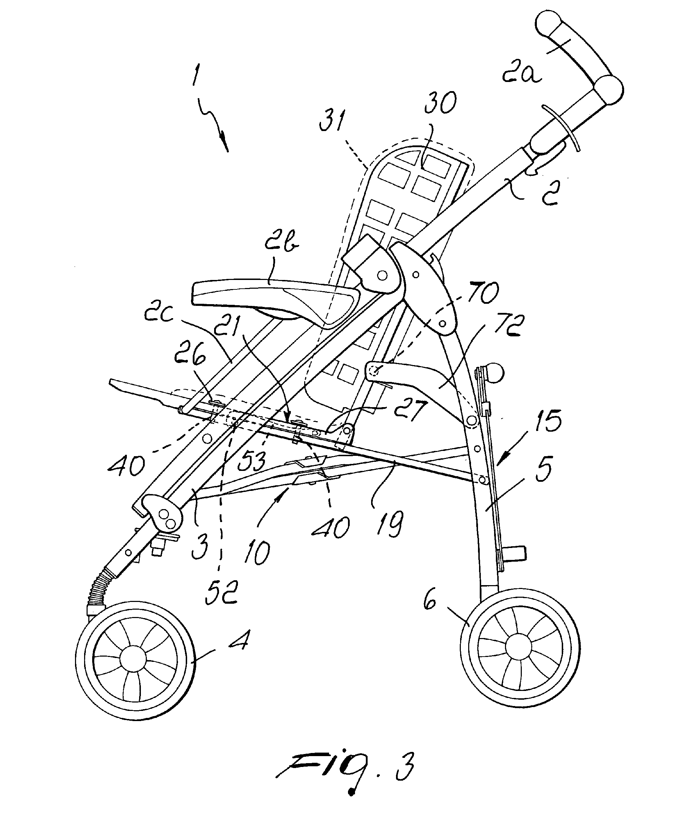

Figure 3 is a side elevation view of the frame of the pushchair;

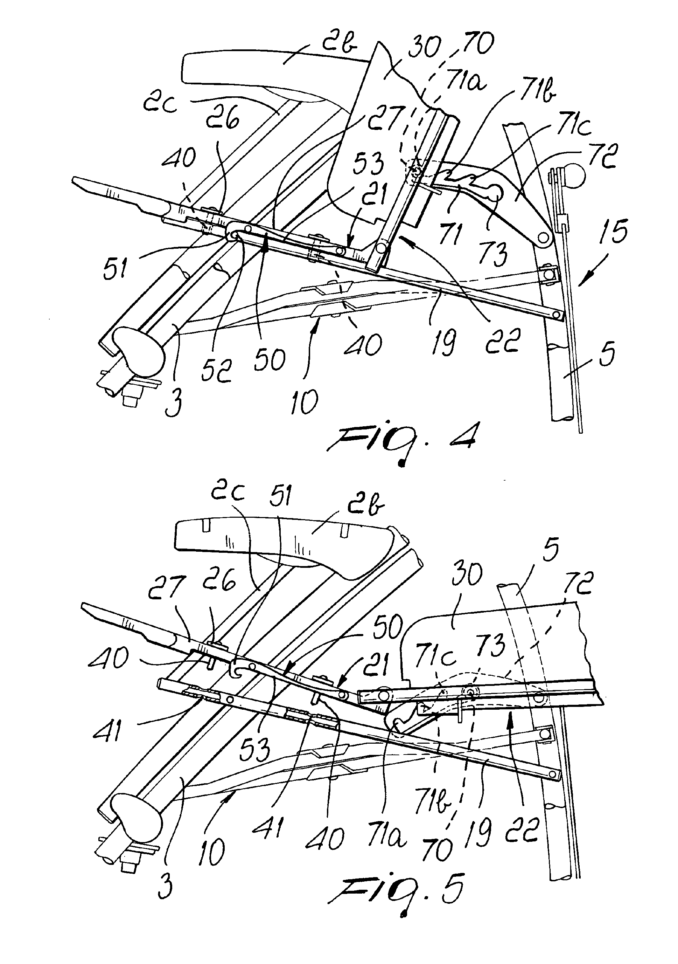

Figure 4 is a view of the seat connected to the pushchair with the means for detachable connection to the supporting framework;
Figure 5 is a schematic view of the step for separating the seat;
Figure 6 is a view of the elastic means for connection between the sitting portion and the framework;
Figure 7 is a view of the hook means for connection between the seat and the framework;
Figure 8 is a schematic view of the seat supporting frame;
Figure 9 is an exploded perspective view of the additional means for detachable locking of the seat;
Figures 10, 11 and 12 are successive sectional views of the steps for the engagement of the seat.

With reference to the figures, the umbrella-folding frame particularly for pushchairs, baby carriages and the like comprises a supporting framework, which is generally of the type described in Italian patent application MI 2003 A 001296 by the same Applicant, which is assumed included herein by reference.

Generally speaking, the framework 1 comprises two upper front posts 2, which end in an upward region with optionally rotatable grip elements 2a.

An armrest 2b is articulated to each post 2 and is articulated, in a central position, to a linkage 2c, which in turn is articulated to a lateral cross-member, to which the seat is coupled as more clearly described hereinafter.

In the present type, the armrest is an element that is stably connected to the framework and acts as a supporting and coupling device for the various accessories; in particular, attention is called to the mutual independence of the armrests and the seat to which the back is connected.

The upper front posts 2 are mutually movable with respect to two lower front posts 3, which end with front casters 4.

A detachable coupling device is provided between the posts 2 and 3 and is not described here since it is irrelevant to the present invention.

The upper end of two rear posts 5, which end with rear casters 6, is articulated to the lower front posts 3.

The pairs of posts, which form the sides of the framework, are joined by an assembly for mutually connecting the posts for transition from an open position to a closed position of the framework and/or vice versa, which is constituted by a central crosspiece 10, in which the front ends are articulated to the lower ends of the upper posts 2 and the rear ends are articulated with a double articulation to the rear posts 5.

The connection assembly further has a rear articulated assembly, which is generally designated by the reference numeral 15.

The framework is further provided with a pair of lateral cross-members 19, which are articulated between the upper front posts 2 and the rear posts 5; such pair of cross members acts as an interconnection element for the seat or sitting portion of the pushchair, generally designated by the reference numeral 20.

The peculiarity of the invention consists in that means are provided for detachable connection to the supporting framework of the seat 20, which is formed by a sitting portion, generally designated by the reference numeral 21, to which a back, generally designated by the reference numeral 22, is articulated; said seat is independent of the armrests that constitute an integral part of the framework.

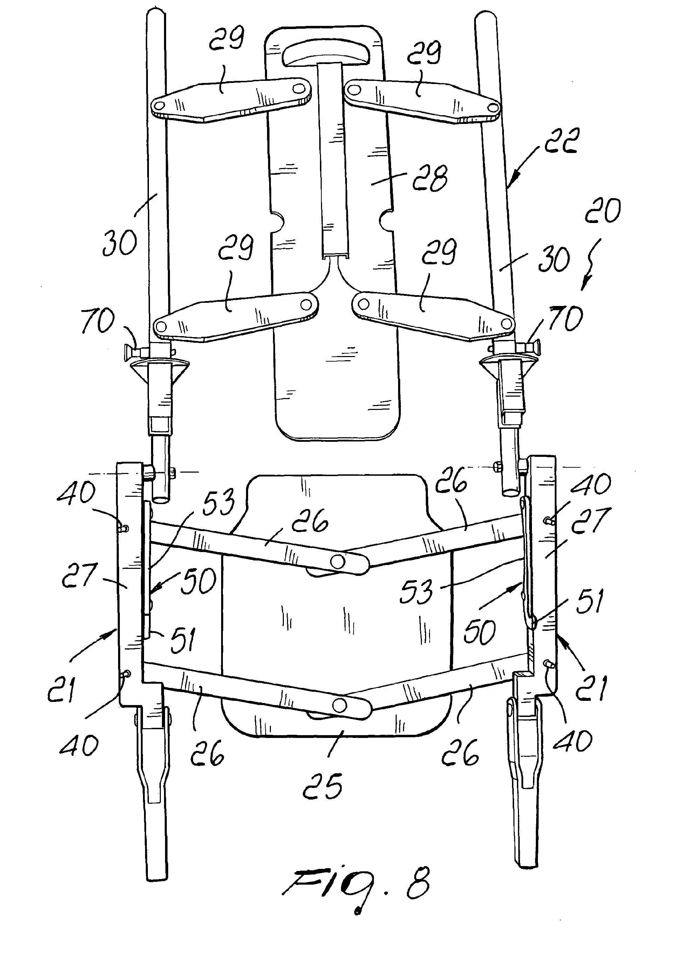

The seat 20, as shown in Figure 8, has a central seat portion 25 to which lateral arms of the sitting portion 27 are connected by means of parallelogram-like bars 26; said arms are arranged side by side and allow simultaneous folding of the seat when the frame is folded.

The back 22, which as mentioned is articulated to the sitting portion 21, is provided with a central body 28, which is articulated, by means of parallelogram-like bars 29, to sides 30, which are in turn articulated to the lateral arms 27 so as to allow the folding of the seat as well when the frame is folded.

The sides 30 in practice form wings that provide a lateral protection for the child.

A conventional padding 31 can be applied to the frame 20 and can be removed so as to allow to wash it and optionally replace it.

As mentioned earlier, a particular characteristic of the invention consists in that means are provided for detachably connecting the seat to the framework, which accordingly allow to easily remove the seat from the framework when the seat does not need to be used, since other accessories, such as a basket, bassinet, car seat and so forth are provided.

Said detachable connection means are constituted by means for centering and positioning the sitting portion with respect to the transverse bars 19, which in a preferred but non-limiting embodiment are obtained by means of two pins 40, which protrude from each lateral bar 27 and can be inserted in through holes 41 provided in the cross-member 19.

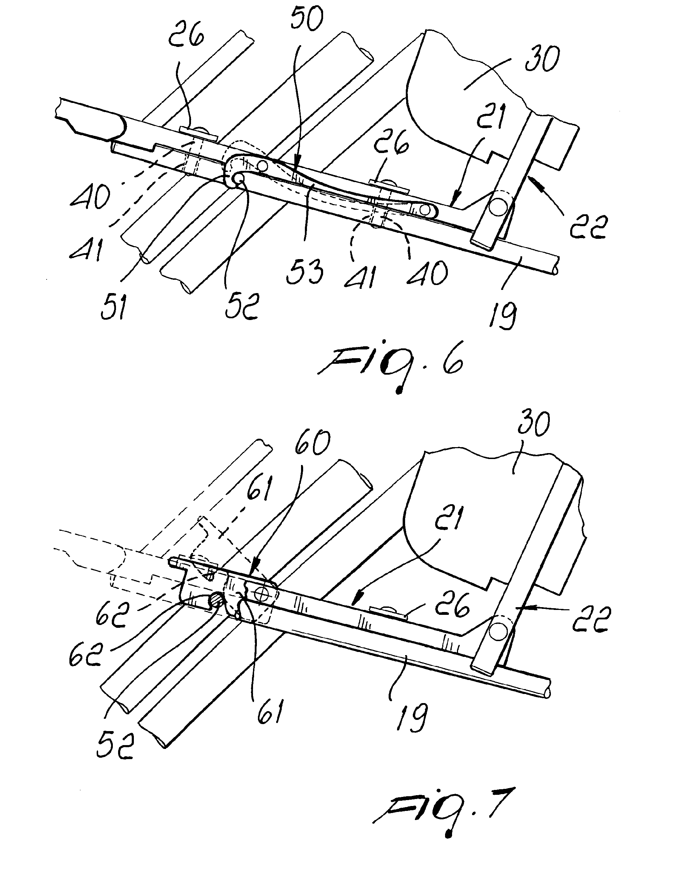

Means for detachable coupling are also provided which allow to fix the sitting portion to the cross-member; such means, as shown in Figure 5, can be provided by an elastic engagement, designated by the reference numeral 50, which has a hook-shaped head 51 that can be inserted with a snap action on a locking pin 52 that protrudes from the framework.

The hook-shaped head 51 is connected to an elastic elongated body 53, which applies an elastic pushing force in order to keep the hook-shaped portion 51 engaged with the pin 52.

The structure adopted allows to achieve coupling and fastening simply by pressing, so that even if locking is inadvertently forgotten, the very weight of the child causes the hook to engage the locking pin 52.

Figure 7 describes an embodiment of the locking means, constituted by a free hook, designated by the reference numeral 60, which in practice provides a plate 61 that is hinged to the lateral arms 27 and forms a hook-shaped receptacle 62, which can be rotated manually in order to engage the locking pin 52.

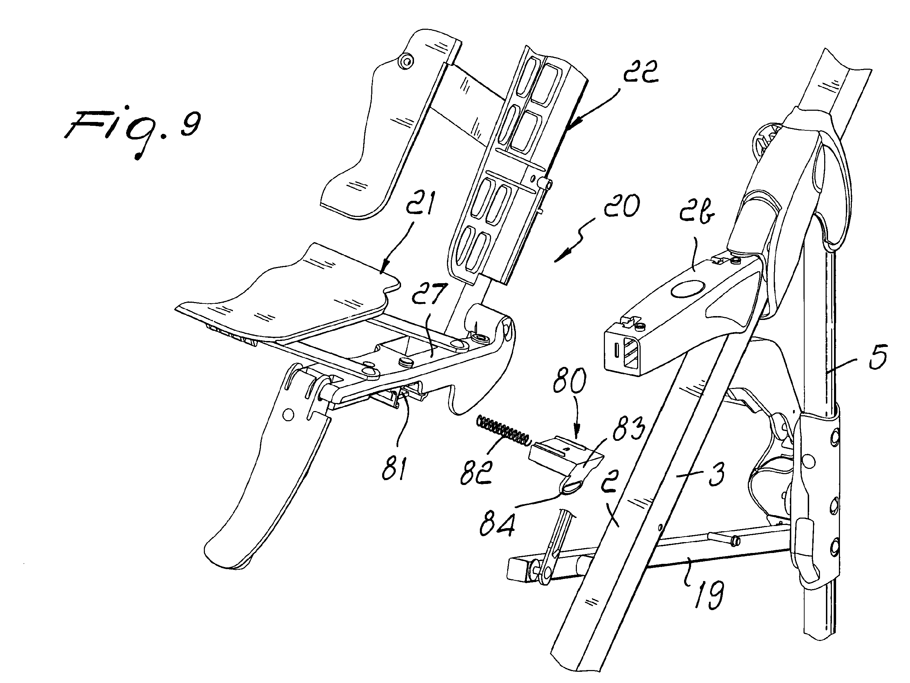

According to another embodiment, shown in Figures 9 to 12, the removable locking means comprise an engagement button 80, which is slidingly accommodated in a receptacle 81 formed by the lower face of each one of the lateral arms of the sitting portion, again designated by the reference numeral 27.

The button 80, which performs a translational motion in a direction that is substantially perpendicular to the arms 27 in contrast with, and due to the action of, elastic means constituted by a pusher spring 82, has a sloping external end 83, which ends in a downward region with a pusher tab 84.

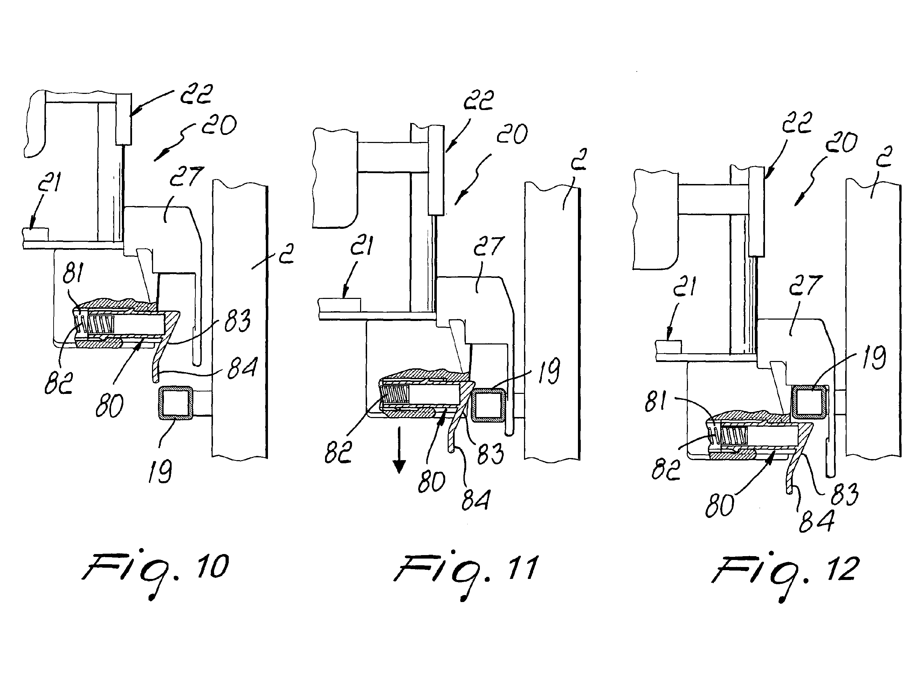

In order to perform coupling (Figure 11), it is sufficient to rest the seat 20, arranging the arms 27 above the lateral cross-members 19, which, by engaging the sloping end 83 initially cause the button 80 to retract into the receptacle 81, compressing the spring 82, until, after passing beyond the cross-members 19, the buttons (Figure 12) are extracted from their corresponding seats 81, engaging below the cross-members 19.

For release, it is sufficient to act on the tabs 84, causing the retraction of the buttons 80 into the seats 81, consequently allowing to disengage from the cross-members 19.

To connect the back, such back has, at its sides 30, mushroom-shaped pins 70, which can be inserted in a contoured slot 71 provided on a positioning arm 72 pivoted to the rear posts.

The slot 71 forms the seats 71 a, 71 band 71 c for positioning the back with various inclinations, in a per se known manner, and further has a wider seat, designated by the reference numeral 73, which allows to insert and extract the mushroom-shaped pin.

Accordingly, with the described arrangement, in order to disengage the seat it is sufficient to act on the locking means so as to extract the sitting portion with respect to the centering and positioning means, and it is then sufficient to position the back so that the mushroom-shaped pin is located at the wider seat that allows its extraction.

In order to reapply the seat, it is obviously sufficient to repeat the same operations in reverse.

From what has been described above, it is therefore evident that the invention achieves the intended aim and objects, and in particular the fact is stressed that it is possible to remove the seat completely, thus preserving its padding and most of all eliminating the bulk and the unsightly appearance of the seat, which does not need to be used when the accessories are applied.

With the arrangement described above, it is possible to remove and apply the seat, which is structured so as to fold easily with respect to the framework.

The invention thus conceived is susceptible of numerous modifications and variations, all of which are within the scope of the inventive concept.

Thus, for example, the centering pins that provide the centering and positioning means may be provided with any configuration or with any other constructive criterion, without altering the principle that it is necessary to have an element that allows to have an always defined and stable positioning of the seat with respect to the frame.

Likewise, the configuration of the position selector can be modified and so can the shape of the mushroom-shaped pin, which in practice is a position selector.

All the details may further be replaced with other technically equivalent elements.

In practice, the materials used, as well as the contingent shapes and dimensions, may be any according to requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An umbrella-folding frame, particularly for pushchairs, baby carriages and the like, comprising a supporting framework that is provided with two upper front posts, with each of which an armrest is stably associated, two lower front posts being connected to said two upper front posts and being mutually movable with respect to said upper front posts, two rear posts being further provided which are articulated to said lower front posts, an assembly for mutually connecting said posts for transition from an open position to a closed position and/or vice versa being also provided, **characterized in that** it comprises means for detachably connecting to said supporting framework a seat constituted by a sitting portion to which a back is articulated, said seat being independent of said armrests.

2. The umbrella-folding frame according to claim 1, **characterized in that** said detachable connection means are provided at a pair of lateral cross-members, which are articulated between the upper front posts and the rear posts.

3. The umbrella-folding frame according to the preceding claims, **characterized in that** said seat has a central part of the sitting portion that is connected, by means of parallelogram-like bars, to lateral arms of the sitting portion, sides of the back being articulated to said lateral arms of the sitting portion and being connected, by means of parallelogram-like bars, to a central body of the back.

4. The umbrella-folding frame according to one or more of the preceding claims, **characterized in that** said detachable connection means comprise means for centering and positioning the sitting portion with respect to said lateral cross-members.

5. The umbrella-folding frame according to one or more of the preceding claims, **characterized in that** said centering and positioning means comprise two pins that protrude from each one of said lateral arms and can be inserted in through holes formed in said lateral cross-members.

6. The umbrella-folding frame according to one or more of the preceding claims, **characterized in that** it comprises means for the detachable locking of said sitting portion.

7. The umbrella-folding frame according to one or more of the preceding claims, **characterized in that** said detachable locking means comprise an elastic engagement element, which is supported by each one of said lateral arms and can engage a locking pin that protrudes from said framework.

8. The umbrella-folding frame according to one or more of the preceding claims, **characterized in that** said hook-shaped head is connected to an elastic elongated body, which provides an elastic pushing force in order to keep said hook-shaped head engaged with said locking pin.

9. The umbrella-folding frame according to one or more of the preceding claims, **characterized in that** said detachable locking means comprise a free hook, which is provided with a plate that is pivoted to the corresponding lateral arm and forms a hook-shaped receptacle that can engage said locking pin.

10. The umbrella-folding frame according to one or more of the preceding claims, **characterized in that** it comprises, at said sides of the back, mushroom-shaped pins that can be inserted in a contoured slot provided in positioning arms that are hinged to said rear posts, said contoured slot forming seats for positioning the back with various inclinations and a wider seat for the engagement and disengagement of said mushroom-shaped pin with respect to said contoured slot.

11. The umbrella-folding frame according to one or more of the preceding claims, **characterized in that** said detachable locking means comprise engagement buttons, which are slidingly accommodated in seats formed in said lateral arms of the sitting portion, said engagement buttons having a sloping external end.

12. The umbrella-folding frame according to one or more of the preceding claims, **characterized in that** it comprises elastic means, which act between said engagement buttons and the bottom of the corresponding seat.

13. The umbrella-folding frame according to one or more of the preceding claims, **characterized in that** it comprises a pusher tab that is connected to said engagement button.
